# EUROPEAN PATENT APPLICATION

(11) **EP 4 632 872 A1**
(43) Date of publication of application: **15.10.2025**
(21) Application number: 25164952.1
(22) Date of filing: 20.03.2025
(51) Int. Cl.: H01M 10/48, A62C 35/02

(54) **BATTERY PACK CASE FOR ELECTRIC VEHICLE**

(30) Priority: 25.03.2024 KR 20240040272
(71) Applicant: Hyundai Mobis Co., Ltd., Gangnam-gu Seoul 06141 (KR)
(72) Inventor: KI, Won Yong, Yongin-si, Gyeonggi-do 16891 (KR); LEE, Seung Jun, Yongin-si, Gyeonggi-do 16891 (KR)
(74) Representative: Jung, Minkyu

(57) **Abstract**

A battery pack case for an electric vehicle is provided. The battery pack includes: a lower case including an outer wall and one or more partition walls therein, each of the outer wall and the one or more partition walls including one or more gas storage devices that store gas; and an upper case connected to the lower case and including spray plates that spray gases introduced from the one or more gas storage devices. The one or more gas storage devices are integrated with the one or more partition walls and the outer wall of the lower case, and the battery pack case accommodates one or more battery modules.

## Description

### CROSS-REFERENCE TO RELATED APPLICATION

The present application claims priority to and the benefit under 35 USC § 119(a) of Korean Patent Application No. 10-2024-0040272, filed March 25, 2024, in the Korean Intellectual Property Office, the entire contents of which is incorporated herein for all purposes by this reference.

### BACKGROUND

### 1. Field of the Invention

The present invention relates to a battery pack case for an electric vehicle, and more specifically, to a case for a battery system mounted outside a vehicle.

### 2. Description of the Related Art

A battery pack case for an electric vehicle is a main component for providing traveling power for an electric vehicle and performs various roles. The most basic role among them is to store electric energy. A battery pack stores charged electricity and uses the electricity to move a vehicle through an electric motor.

Conventional battery packs for an electric vehicle accommodate a number of battery modules inside a battery case composed of a lower case and an upper case, and each battery module is composed of a number of battery cells.

Meanwhile, inside the above battery pack, heat generation, off-gas discharge, and the like of battery cells may occur due to some cause. In the event of such a fire in a battery pack, initial fire suppression is required, and as such a means, a separate gas storage tank is included inside the battery case and a separate pump is used to spray gas to suppress the fire. In addition, the conventional battery pack include a control logic that senses phenomena after a fire occurs, such as temperature and smoke detection, and sprays a fire extinguishing agent.

However, in the case of the conventional battery packs, the method of including a gas storage tank in a battery case and spraying gas using a separate pump has a problem that the pump cannot operate when a control device is damaged at a high temperature. In addition, a method of recovering unnecessary gas with a two-way flow is applied, and this method has a possibility that the gas may flow backward, making an actual operation impossible. In addition, a separate injector is required, and when the injector is damaged due to a high temperature caused by a fire, there is a problem that the fire extinguishing agent is not sprayed due to a hole being blocked.

A related art document is Korean Patent Registration No. 10-2407796 ("extinguishing device of battery energy storage system," registered date: June 07, 2022).

### SUMMARY

The present invention has been made in efforts to solve the above problems and is directed to providing a battery pack case for an electric vehicle, in which it is possible to secure rigidity maintenance performance of a structure of a conventional battery pack by mounting a fire extinguishing agent storage container in a battery pack.

In addition, the present invention is directed to providing a battery pack case for an electric vehicle, in which it is possible to remove a time difference up to operation determination by spraying a fire extinguishing agent under a specific condition without a separate control logic.

In addition, the present invention is directed to providing a battery pack case for an electric vehicle, in which a fire extinguishing agent may be sprayed even under a high temperature environment.

In a general aspect of the disclosure, a battery pack case for an electric vehicle, includes: a lower case including an outer wall and one or more partition walls therein, each of the outer wall and the one or more partition walls including one or more gas storage devices that store gas; and an upper case connected to the lower case and including a plurality of spray plates that spray gases introduced from the one or more gas storage devices, wherein the one or more gas storage devices are integrated with the one or more partition walls and the outer wall of the lower case, and wherein the battery pack case is configured to accommodate one or more battery modules .

The outer wall and the partition wall of the lower case may be formed of an extruded material and include a plurality of internal spaces having a square cross section, and a bead may be provided at corners of the internal space, wherein the one or more gas storage devices may store gas in each internal space.

The bead may be formed of urethane foam.

A volume of the internal space may be 0.6 L.

The one or more gas storage devices may be defined as A-1 to A-3, B-1 and B-2, and C-1 to C-3, wherein, when the one or more partition walls are provided as two partition walls, the A-1 to A-3 may be provided inside one of the one or more outer walls, the B-1 may be provided inside one of the two partition walls, the B-2 may be provided inside the other of the two partition walls, and the C-1 to C-3 may be provided inside an outer wall among the one or more outer walls, which is disposed at a location parallel to the outer wall provided with the A-1 to A-3.

The battery pack case may further include a plurality of first pipes connecting the A-1, the B-1, the B-2, and the C-1 to the upper case, and a direction control valve provided on the first pipe, wherein the plurality of first pipes may include a 1-1 pipe connected to the A-3, a 1-2 pipe connected to the B-1, a 1-3 pipe connected to the B-2, a 1-4 pipe connected to the C-3, and a 1-5 pipe connected to the 1-1 to 1-4 pipes and connected to the upper case, and wherein the direction control valve is provided on the 1-5 pipe.

The 1-5 pipe may have a diameter that decreases toward the upper case.

The plurality of first pipes may further include a 1-6 pipe connected to the 1-5 pipe and provided in a " 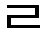 " shape on a lower portion of the upper case.

The battery pack case may further include a plurality of discharge ports provided inside the 1-6 pipe, wherein the discharge port may be a burst type.

The battery pack case may include a plurality of second pipes connecting the A-1 to the A-3 and connecting the C-1 to the C-3, wherein, when a pipe connecting the A-1 to the A-2 and connecting the C-1 to the C-2 is defined as a 2-1 pipe and a pipe connecting the A-2 to the A-3 and connecting the C-2 to the C-3 is defined as a 2-2 pipe, a height of the 2-1 pipe is higher than that of the 2-2 pipe, and a height of the 2-2 pipe is higher than those of the 1-1 pipe and the 1-4 pipe.

The heights of the 2-1 and 2-2 pipes and the 1-1 pipe may each include an interval difference of 5 mm, wherein the heights of the 2-1 and 2-2 pipes and the 1-4 pipe may each include an interval difference of 5 mm.

A ratio of cross-sectional areas of the gas storage unit and the second pipe may be 1.3:1.

Ratios of cross-sectional areas of inlets and outlets of the 2-1 and 2-2 pipes, the 1-1 pipe, and the 1-4 pipe may each be 1:1.2.

A compression pressure of gas stored in B-1 may be 2.58 times greater than a compression pressure of gas stored in A-1.

The plurality of spray plates may include first to fourth spray plates, wherein the first to fourth spray plates may each include a plurality of holes.

The first and third spray plates have holes of which sizes may increase by 1.44 times toward one side, wherein the second and fourth spray plates have holes of which sizes may decrease by 1.44 times toward one side.

The plurality of spray plates may be coupled to a lower portion of the upper case by laser welding.

The battery pack case may further include a controller configured to: control opening and closing of the direction control valve based on an output of a temperature sensor in the one or more battery modules; and control the opening and closing of the direction control valve based on at least one of a temperature being output, a temperature change rate over time, and a duration.

The controller may be further configured to open the direction control valve when the temperature being output exceeds 100 °C, the change rate over time exceeds 1 °C/s, and such a state is maintained for 3 seconds.

### BRIEF DESCRIPTION OF THE DRAWINGS

FIG. 1 is a schematic view illustrating a lower case of a battery pack case for an electric vehicle according to an embodiment of the present invention.
FIG. 2 is a schematic view illustrating an upper case of the battery pack case for an electric vehicle according to the embodiment of the present invention.
FIG. 3 is a schematic view illustrating a gas storage unit according to the embodiment of the present invention.
FIG. 4 is a schematic view illustrating a connection structure between the upper case and the gas storage unit according to the embodiment of the present invention.
FIG. 5 is a schematic view illustrating a gas injection and spray method according to the embodiment of the present invention.
FIG. 6 is a schematic view illustrating a connection structure between gas storage units according to the embodiment of the present invention.
FIG. 7 is a graph illustrating a relationship between stress and an internal volume of the gas storage unit in accordance with the thickness of the gas storage unit according to the embodiment of the present invention.
FIG. 8 is a graph illustrating a flow volume according to a pressure of the gas storage unit.
FIG. 9 is a schematic view illustrating the upper case according to the embodiment of the present invention.
FIG. 10 is a schematic view illustrating a gas discharge method according to the embodiment of the present invention.
FIG. 11 is a schematic view illustrating a spray plate of the upper case according to the embodiment of the present invention.
FIG. 12 is a schematic view illustrating a connection structure between the lower case and the upper case according to the embodiment of the present invention.
FIG. 13 is a schematic view illustrating gas movement according to the embodiment of the present invention.
FIG. 14 is a schematic view illustrating coupling between the upper case and the spray plate and between the upper case and a first pipe according to the embodiment of the present invention.
FIG. 15 is a flowchart illustrating a control method of a control unit according to the embodiment of the present invention.
FIG. 16 is a graph illustrating the result of evaluating heat transfer to which the present invention is applied.
FIG. 17 is pictures of the result of evaluating heat transfer according to the present invention.

### DETAILED DESCRIPTION

To describe the present invention, operational advantages of the present invention, and objects achieved by the implementation of the present invention, hereinafter, exemplary embodiments of the present invention will be exemplified and described with reference to the embodiments.

First, terms used in this application are only used to describe specific embodiments and are not intended to limit the present invention, and singular expressions may include plural expressions unless the context clearly indicates otherwise. In addition, in this application, it should be understood that terms such as "comprise" or "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

In describing the present invention, when it is determined that the detailed description of related known configurations or functions may obscure the gist of the present invention, detailed description thereof will be omitted.

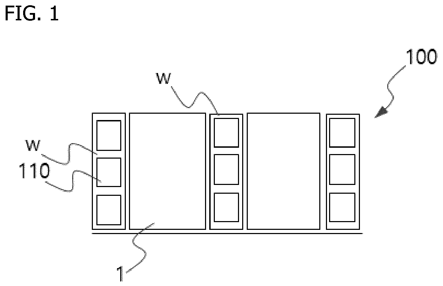

FIG. 1 is a schematic view illustrating a lower case of a battery pack case for an electric vehicle according to an embodiment of the present invention.

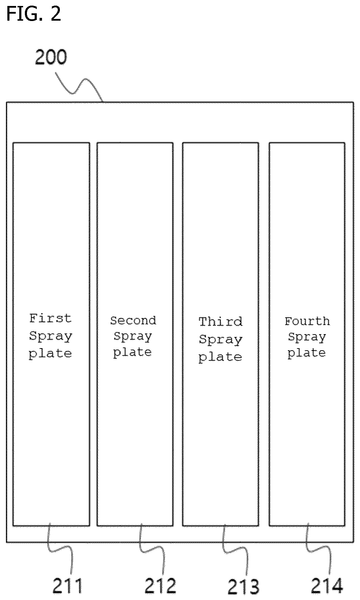

FIG. 2 is a schematic view illustrating an upper case of the battery pack case for an electric vehicle according to the embodiment of the present invention.

As illustrated in FIGS. 1 and 2, a battery pack case for an electric vehicle according to the embodiment of the present invention includes a lower case 100 and an upper case 200.

The lower case 100 of FIG. 1 may include at least one partition wall w therein. In addition, the lower case 100 may include a plurality of gas storage unit 110 storing gas in one of the partition wall w and an outer wall w, and specifically, the plurality of gas storage units 110 may be integrally provided inside one of the partition wall w and the outer wall w of the lower case 100. In this case, the partition wall w and the outer wall w including the plurality of gas storage units 110 are preferably parallel to each other.

The upper case 200 of FIG. 2 may be connected to the lower case 100 and may include a plurality of spray plates 210 that spray gases introduced from the plurality of gas storage units 110 included in the lower case 100.

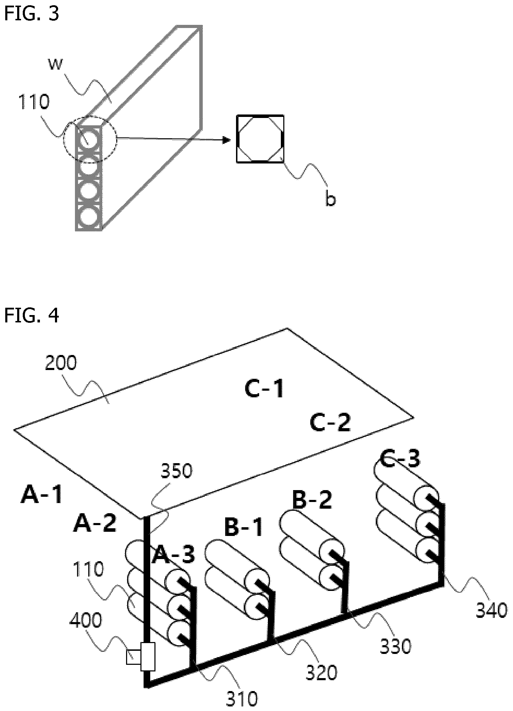

Hereinafter, the battery pack case for an electric vehicle according to various embodiments of the present invention will be described in detail with reference to FIGS. 3 to 11.

FIG. 3 is a schematic view illustrating a gas storage unit according to the embodiment of the present invention.

FIG. 4 is a schematic view illustrating a connection structure between the upper case and the gas storage unit according to the embodiment of the present invention.

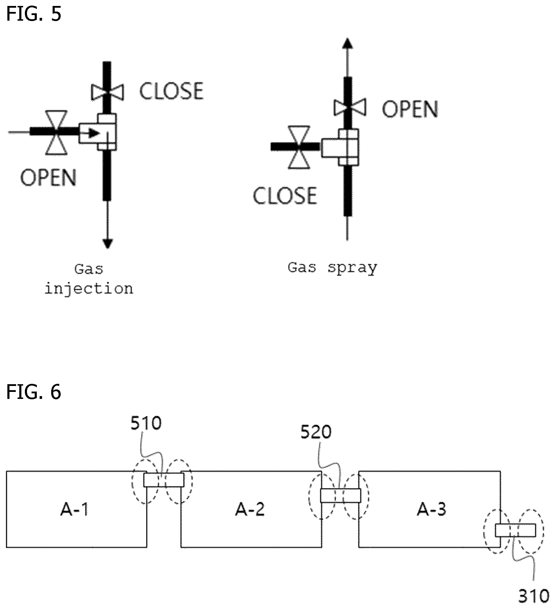

FIG. 5 is a schematic view illustrating a gas injection and spray method according to the embodiment of the present invention.

FIG. 6 is a schematic view illustrating a connection structure between gas storage units according to the embodiment of the present invention.

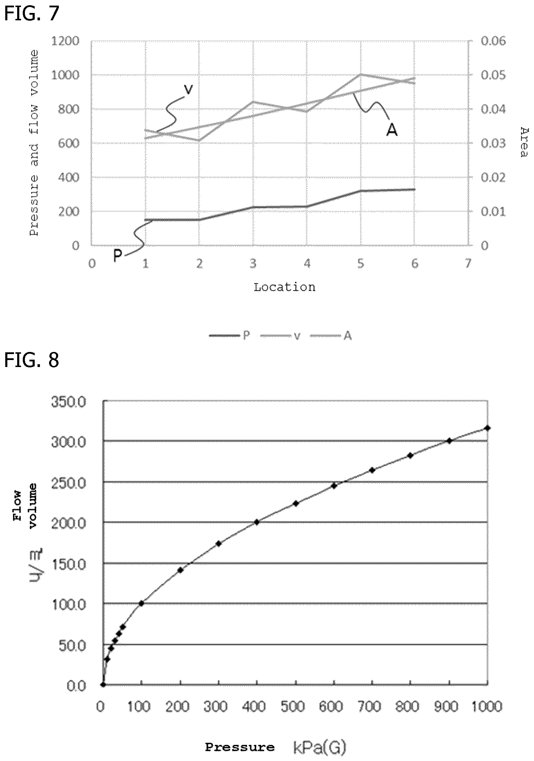

FIG. 7 is a graph illustrating a relationship between stress and an internal volume of the gas storage unit in accordance with the thickness of the gas storage unit according to the embodiment of the present invention.

FIG. 8 is a graph illustrating a flow volume according to a pressure of the gas storage unit.

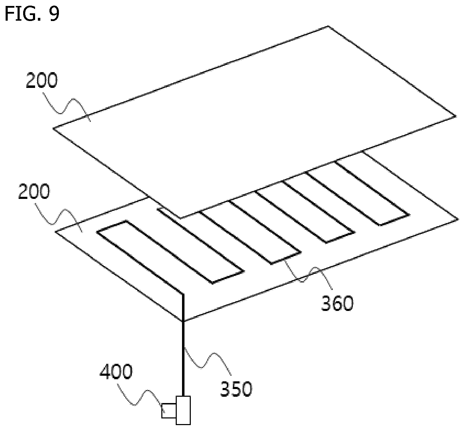

FIG. 9 is a schematic view illustrating the upper case according to the embodiment of the present invention.

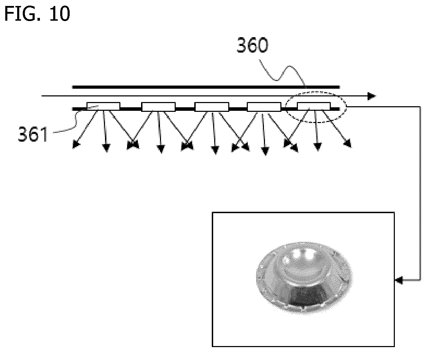

FIG. 10 is a schematic view illustrating a gas discharge method according to the embodiment of the present invention.

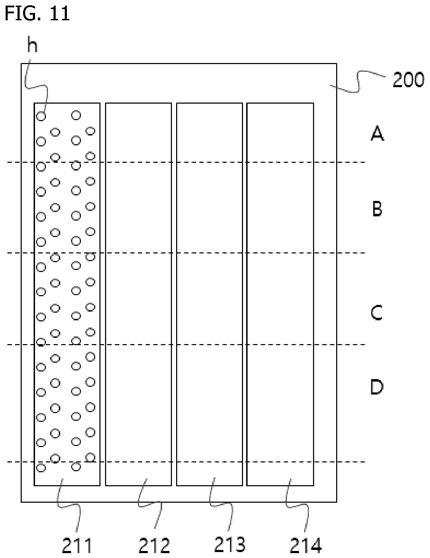

FIG. 11 is a schematic view illustrating a spray plate of the upper case according to the embodiment of the present invention.

First, referring to the lower case 100 illustrated in FIG. 3, the gas storage unit 110 may be provided inside the outer wall w and the partition wall w of the lower case 100. Specifically, the outer wall w and the partition wall w of the lower case 100 may be formed of an extruded material and may include a plurality of internal spaces having a square cross section. This is a condition required because of stress concentration due to characteristics of a compression container. Generally, the amount of a fire extinguishing agent required to suppress a fire in an 89 kWh battery module is about 0.6 L. Accordingly, a volume of an internal space of the extruded material is preferably 0.6 L. Here, the gas storage unit 110 may be formed by injecting 1 L of a fire extinguishing agent and then injecting air to form an internal pressure. In this case, the internal pressure may be compressed to form 10 kPa, and since the extruded material may burst when the internal pressure is compressed to 10 kPa or higher, it is preferable to block the gas storage unit 110 using a solenoid valve when the pressure reaches 10 kPa. In addition, a bead b may be provided at corners of the internal space into which gas is injected. Accordingly, an impact can be absorbed, and the gas storage unit 110 can be fixed. Specifically, the bead b is preferably formed of urethane foam, and it is necessary to apply a method of filling the internal space with the urethane foam and then hardening the urethane foam.

The arrangement of a plurality of gas storage units 110 when the partition wall w is provided as two partition walls will be described with reference to FIG. 4. When the plurality of gas storage units 110 are defined as A-1 to A-3, B-1 and B-2, and C-1 to C-3, A-1 to A-3 may be provided inside one of a plurality of outer walls w. In addition, B-1 may be provided inside one of the two partition walls w, and B-2 may be provided inside the other of the two partition walls w. In addition, C-1 to C-3 may be provided inside an outer wall w among the plurality of outer walls w, which is formed at a position parallel to an outer wall w provided with A-1 to A-3.

In addition, the battery pack case of the present invention may further include a plurality of first pipes 300 and a direction control valve 400.

The first pipe 300 may connect each gas storage unit 110 to the upper case 200. Specifically, the first pipe 300 may connect A-1, B-1, B-2, and C-1 to the upper case 200.

The direction control valve 400 may be provided on the first pipe 300.

Specifically, the plurality of first pipes 300 may include 1-1 to 1-5 pipes 310 to 350.

More specifically, the 1-1 pipe 310 may be connected to A-1, the 1-2 pipe 320 may be connected to B-1, the 1-3 pipe 330 may be connected to B-2, and the 1-4 pipe 340 may be connected to C-1 among the gas storage units 110, and the 1-5 pipe 350 may be connected to the 1-1 to 1-4 pipes 340 and connected to the upper case 200. In this case, the direction control valve 400 is preferably provided on the 1-5 pipe 350.

Describing the direction control valve 400 in detail with reference to FIG. 5, the direction control valve 400 may be preferably a 3-way valve, may be provided on the 1-5 pipe 350 as a 3-way valve, and may include the solenoid valve 400 at one side and in a direction perpendicular to the one side. Accordingly, when the solenoid valve 400 provided in the direction perpendicular to the one side is opened and the solenoid valve 400 provided at the one side is closed, gas may be injected through a pipe connected to the other side in the direction perpendicular to the one side.

On the other hand, when the solenoid valve 400 provided in the direction perpendicular to the one side is closed and the solenoid valve 400 provided at the one side is opened, gas may be injected from the other side to the one side. Accordingly, the gas in the gas storage unit 110 provided in the lower case 100 may flow to the upper case 200 through the 1-1 to 1-5 pipes 310 to 350.

Meanwhile, as illustrated in FIG. 6, the battery pack case may further include a second pipe 500 to interconnect the plurality of gas storage units 110. The second pipe 500 may connect between A-1 to A-3 and between C-1 to C-3. Specifically, the second pipe 500 may include a 2-1 pipe 510 to a 2-2 pipe 520. The 2-1 pipe 510 may connect A-1 to A-2 and connect C-1 to C-2, and the 2-2 pipe 520 may connect A-2 to A-3 and connect C-2 to C-3.

Referring to FIGS. 6 to 8, among the plurality of gas storage units 110 of the present invention, A-1 to A-3 and C-1 to C-3 may each allow the stored gas to diffuse to the outside when the solenoid valve is opened due to a pressure difference (10 kPa) between the outside and the inside. Looking at a flow of a fluid, since the fluid flows from a high location to a low location, the second pipe 500 including a plurality of pipes interconnecting the gas storage units 110 may have a height difference.

Specifically, a height of the 2-1 pipe 510 connecting A-1 to A-2 and connecting C-1 to C-2 is preferably higher than a height of the 2-2 pipe 520 connecting A-2 to A-3 and connecting C-2 to C-3. In addition, a height of the 2-2 pipe 520 is preferably higher than heights of the 1-1 pipe 310 and the 1-4 pipe 340.

More specifically, each pipe preferably has a height difference of 5 mm. In this case, the flow of the gas stored therein may be the smoothest due to the pressure difference caused in each gas storage unit 110.

In addition, to minimize the loss at an inlet of the pipe, a ratio of cross-sectional areas of each gas storage unit 110 and the second pipe 500 is preferably 1.3:1.

In addition, since ratios of the cross-sectional areas of inlets and outlets of the 2-1 pipe 510 and the 2-2 pipe 520, which are included in the second pipe 500, and the 1-1 pipe 310, and inlets and outlets of the 2-1 pipe 510, the 2-2 pipe 520, and the 1-4 pipe 340 are each 1:1.2, an area of the outlet of the pipe may be greater than an area of the inlet so that the diffusion amount of gas may be increased from A-1 to A-3 or from C-1 to C-3.

In addition, a compression pressure of gas stored in B-1 among the plurality of gas storages 110 is preferably higher than that of A-1. Specifically, the compression pressure of the gas stored in B-1 is preferably 2.58 times higher than that of A-1. This is to help generate an additional pressure when the pressure generated in A-1 to A-3 is insufficient, and since A-1 and B-1 are connected, a pressure may be supplemented between the gas storage units 110. In addition, in the present invention, a height difference and area difference between the pipes can be provided to prevent a backflow of the gas, and sufficient flow rate can be secured to allow the gas to be smoothly diffused to the upper case 200. To this end, both the second pipe 500 and the 1-5 pipe 350 of the first pipe 300 may have a diameter that decreases toward the upper case 200. Accordingly, it is possible to prevent a backflow with a structure capable of generating a higher pressure due to the diameter decreasing toward the upper case 200, and a sufficient pressure can be generated and transferred to the upper case 200.

Next, the upper case 200 will be described in detail with reference to FIGS. 9 to 11.

First, as illustrated in FIG. 9, the first pipe 300 may further include a 1-6 pipe 360. The 1-6 pipe 360 may be connected to the 1-5 pipe 350 and provided in a " 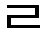 " shape on a lower portion of the upper case 200. Accordingly, the 1-6 pipe 360 may form a flow path that allows gas rising from the connected 1-5 pipe 350 to flow throughout the upper case 200. In this case, as illustrated in FIG. 10, the 1-6 pipe 360 may further include a plurality of discharge ports 361 therein. The discharge port 361 may discharge gas when a valve is burst by a pressure of the gas caused by the burst type. Accordingly, a separate nozzle is not necessary when the gas is discharged.

In addition, as illustrated in FIG. 11, the upper case 200 may include a plurality of spray plates 210.

Specifically, the upper case 200 may include first to fourth spray plates 211 to 214, and the first to fourth spray plates 211 to 214 may each be coupled to the lower portion of the upper case 200 and coupled by laser welding.

The first to fourth spray plates 211 to 214 may each include a plurality of holes h having a predetermined size to spray gas that rises from the gas storage unit 110 of the lower case 100 and is discharged from the 1-6 pipe 360. In this case, the sizes of the holes of the first to fourth spray plates 211 to 214 may not be the same in order to spread the gas to the entire area of the battery pack case.

Specifically, when the sizes of the holes of the first to fourth spray plates 211 to 214 are all the same, gas may be sprayed to only about 70% of the upper case 200. In addition, when the sizes of the holes of the first to fourth spray plates 211 to 214 are all changed at the same rate, gas may be sprayed to only about 57.8% of the upper case 200. Accordingly, the sizes of the holes of the first and third spray plates 211 and 213 increase toward one side, and the sizes of the holes of the second and fourth spray plates 212 and 214 decrease toward one side.

More specifically, it is preferable that the sizes of the holes of the first and third spray plates 211 and 213 increase by 1.44 times toward one side, and the sizes of the holes of the second and fourth spray plates 212 and 214 decrease by 1.44 times toward one side.

Accordingly, gas may be sprayed to about 95% of the entire upper case 200.

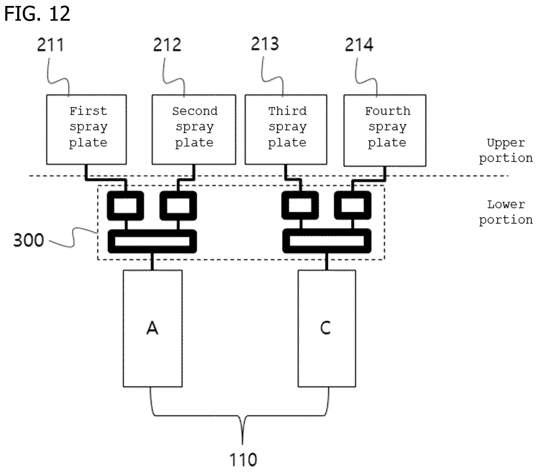

FIG. 12 is a schematic view illustrating a connection structure between the lower case and the upper case according to the embodiment of the present invention.

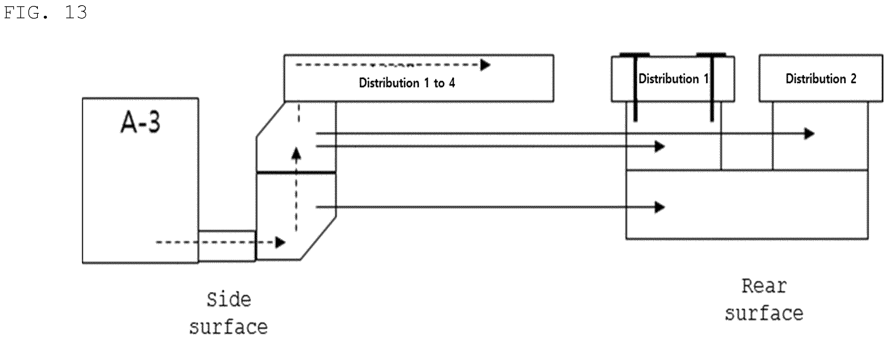

FIG. 13 is a schematic view illustrating gas movement according to the embodiment of the present invention.

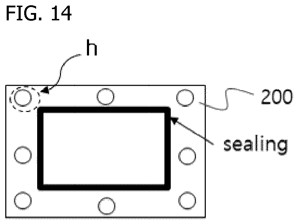

FIG. 14 is a schematic view illustrating coupling between the upper case and the spray plate and between the upper case and a first pipe according to the embodiment of the present invention.

Describing the connection structure between the gas storage unit 110 and the plurality of spray plates 211, 212, 213, and 214 in detail with reference to FIGS. 12 to 14, the battery pack case may include the first pipe 300 as described above in order to connect the plurality of gas storage units 110 located in the lower case 100 to the plurality of spray plates 211, 212, 213, and 214 located in the upper case 200. In this case, gas may be discharged from each gas storage unit 110 and may flow to each of the plurality of spray plates 211, 212, 213, and 214 through the connected first pipe 300 so that a fire extinguishing agent may be sprayed.

In this case, as illustrated in FIG. 14, the upper case 200 and the plurality of spray plates 210 may each be sealed through a laser, and the upper case 200 and the first pipe 300 may each be assembled through fixing holes h.

Meanwhile, the battery pack case for an electric vehicle according to the present invention may further include a control unit (e.g., a controller or a processor) (not illustrated).

The control unit may control the opening and closing of the direction control valve 400 based on an output of a temperature sensor present in a battery module 1.

Specifically, the control unit may control the opening and closing of the direction control valve based on at least one of a temperature output from the temperature sensor, a temperature change rate over time, and a duration.

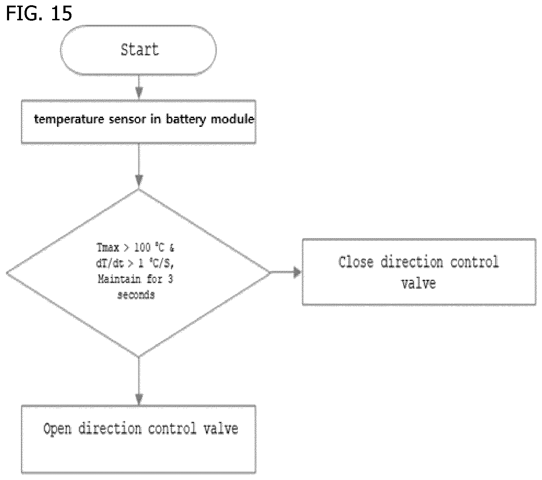

FIG. 15 is a flowchart illustrating a control method of a control unit according to the embodiment of the present invention.

More specifically, as illustrated in FIG. 15, the control unit may open the direction control valve when the temperature output from the temperature sensor exceeds 100 °C, the change rate over time exceeds 1 °C/s, and such a state is maintained for 3 seconds. Conversely, when any one of the above three conditions is not satisfied, the control unit may close the direction control valve.

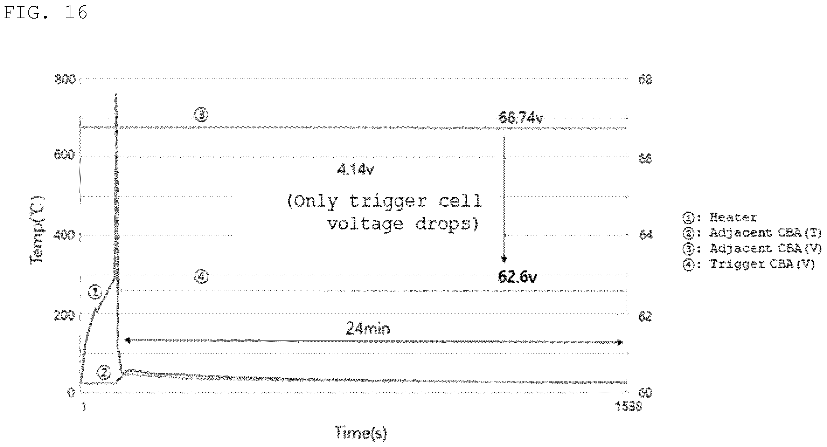

FIG. 16 is a graph illustrating the result of evaluating heat transfer to which the present invention is applied.

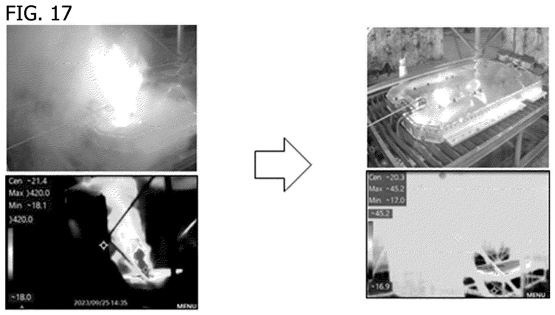

FIG. 17 is pictures of the result of evaluating heat transfer according to the present invention.

In addition, when applying the battery pack case for an electric vehicle according to the present invention to a thermal runaway test, as illustrated in FIG. 16, it can be seen that only a trigger cell voltage drops from 66.74 V to 4.14 V.

In addition, as illustrated in FIG. 17, it can be confirmed that an external temperature stabilized to 45 °C about 7 minutes after the fire extinguishing agent was injected in the event of a fire.

According to the battery pack case for an electric vehicle according to various embodiments of the present invention, in the event of a fire inside the battery pack, the fire extinguishing agent is sprayed within a relatively short time, thereby enabling initial fire suppression.

In addition, the fire occurring in the internal space of the battery pack can be extinguished therein without external exposure, thereby preventing the fire from being transferred to the vehicle.

In addition, since there is no need for the external space for storing the fire extinguishing agent storage container, it is possible to efficiently use the internal space of the vehicle.

Although the exemplary embodiments of the present invention have been described above, the embodiments disclosed in the present invention are not intended to limit the technical spirit of the present invention but are only for description. Accordingly, the technical spirit of the present invention includes not only each disclosed embodiment, but also a combination of the disclosed embodiments, and furthermore, the scope of the technical spirit of the present invention is not limited by these embodiments. In addition, those skilled in the art to which the present invention pertains can variously change and modify the present invention without departing from the spirit and scope of the appended claims, and all such appropriate changes and modifications should be regarded as belonging to the scope of the present invention as equivalents.

### DESCRIPTION OF REFERENCE NUMERALS

1: battery module
100: lower case
110: gas storage unit
200: upper case
210: a plurality of spray plates
211: first spray plate
212: second spray plate
213: third spray plate
214: fourth spray plate
300: first pipe
310: 1-1 pipe
320: 1-2 pipe
330: 1-3 pipe
340: 1-4 pipe
350: 1-5 pipe
360: 1-6 pipe
361: discharge port
400: direction control valve
500: second pipe
510: 2-1 pipe
520: 2-2 pipe
w: outer wall, partition wall
b: bead

## Claims

1. A battery pack case for an electric vehicle, the battery pack comprising:
a lower case including an outer wall and one or more partition walls therein, each of the outer wall and the one or more partition walls including one or more gas storage devices that store gas; and
an upper case connected to the lower case and including a plurality of spray plates that spray gases introduced from the one or more gas storage devices,
wherein the one or more gas storage devices are integrated with the one or more partition walls and the outer wall of the lower case, and
wherein the battery pack case is configured to accommodate one or more battery modules.

2. The battery pack case of claim 1, wherein the outer wall and the partition wall of the lower case are formed of an extruded material and include a plurality of internal spaces having a square cross section, and a bead is provided at corners of the internal space, and
wherein the one or more gas storage devices store gas in each internal space.

3. The battery pack case of claim 2, wherein the bead is formed of urethane foam.

4. The battery pack case of claim 2 or 3, wherein a volume of the internal space is 0.6 L.

5. The battery pack case of any one of claims 1 to 4, wherein the one or more gas storage devices are defined as A-1 to A-3, B-1 and B-2, and C-1 to C-3, and
wherein, when the one or more partition walls are provided as two partition walls,
the A-1 to A-3 are provided inside one of the one or more outer walls,
the B-1 is provided inside one of the two partition walls,
the B-2 is provided inside the other of the two partition walls, and
the C-1 to C-3 are provided inside an outer wall among the one or more outer walls, which is disposed at a location parallel to the outer wall provided with the A-1 to A-3.

6. The battery pack case of claim 5, further comprising:
a plurality of first pipes connecting the A-1, the B-1, the B-2, and the C-1 to the upper case; and
a direction control valve provided on the first pipe,
wherein the plurality of first pipes include:
a 1-1 pipe connected to the A-3;
a 1-2 pipe connected to the B-1;
a 1-3 pipe connected to the B-2;
a 1-4 pipe connected to the C-3; and
a 1-5 pipe connected to the 1-1 to 1-4 pipes and connected to the upper case, and
wherein the direction control valve is provided on the 1-5 pipe.

7. The battery pack case of claim 6, wherein the 1-5 pipe has a diameter that decreases toward the upper case.

8. The battery pack case of claim 6 or 7, wherein the plurality of first pipes further comprise a 1-6 pipe connected to the 1-5 pipe and provided in a " 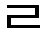 " shape on a lower portion of the upper case.

9. The battery pack case of claim 8, further comprising a plurality of discharge ports provided inside the 1-6 pipe,
wherein the discharge port is a burst type.

10. The battery pack case of any one of claims 6 to 9, further comprising a plurality of second pipes connecting the A-1 to the A-3 and connecting the C-1 to the C-3,
wherein, when a pipe connecting the A-1 to the A-2 and connecting the C-1 to the C-2 is defined as a 2-1 pipe and a pipe connecting the A-2 to the A-3 and connecting the C-2 to the C-3 is defined as a 2-2 pipe, a height of the 2-1 pipe is higher than that of the 2-2 pipe, and a height of the 2-2 pipe is higher than those of the 1-1 pipe and the 1-4 pipe.

11. The battery pack case of claim 10, wherein the heights of the 2-1 and 2-2 pipes and the 1-1 pipe each include an interval difference of 5 mm, and
wherein the heights of the 2-1 and 2-2 pipes and the 1-4 pipe each include an interval difference of 5 mm.

12. The battery pack case of claim 10 or 11, wherein a ratio of cross-sectional areas of the gas storage unit and the second pipe is 1.3:1.

13. The battery pack case of any one of claims 10 to 12, wherein ratios of cross-sectional areas of inlets and outlets of the 2-1 and 2-2 pipes, the 1-1 pipe, and the 1-4 pipe are each 1:1.2.

14. The battery pack case of any one of claims 5 to 13, wherein a compression pressure of gas stored in B-1 is 2.58 times greater than a compression pressure of gas stored in A-1.

15. The battery pack case of any one of claims 1 to 14, wherein the plurality of spray plates include first to fourth spray plates, and
wherein the first to fourth spray plates each include a plurality of holes.

16. The battery pack case of claim 15, wherein the first and third spray plates have holes of which sizes increase by 1.44 times toward one side, and
wherein the second and fourth spray plates have holes of which sizes decrease by 1.44 times toward one side.

17. The battery pack case of any one of claims 1 to 16, wherein the plurality of spray plates are coupled to a lower portion of the upper case by laser welding.

18. The battery pack case of any one of claims 6 to 17, further comprising a controller configured to:
control opening and closing of the direction control valve based on an output of a temperature sensor in the one or more battery modules; and
control the opening and closing of the direction control valve based on at least one of a temperature being output, a temperature change rate over time, and a duration.

19. The battery pack case of claim 18, wherein the controller is further configured to open the direction control valve when the temperature being output exceeds 100 °C, the change rate over time exceeds 1 °C/s, and such a state is maintained for 3 seconds.
